# FASCICULE DE BREVET EUROPEEN

(11) **EP 3 760 482 B1**
(45) Date de publication et mention de la délivrance du brevet: **11.10.2023**
(21) Numéro de dépôt: 20187786.7
(22) Date de dépôt: 24.07.2020
(51) Int. Cl.: B60P 3/08

(54) **PLATEAU DE CHARGEMENT OPTIMISE POUR PORTE-VOITURES ET REMORQUE OU SEMI-REMORQUE COMPORTANT UN TEL PLATEAU**
OPTIMIERTE LADEFLÄCHE FÜR AUTOTRANSPORTER, UND ANHÄNGER ODER SATTELAUFLIEGER, DER MIT EINER SOLCHEN LADEFLÄCHE AUSGESTATTET IST
PLATE FOR OPTIMISED LOADING FOR CAR TRANSPORTER AND TRAILER OR SEMI-TRAILER COMPRISING SUCH A PLATE

(30) Priorité: 26.07.2019 FR 1908571
(43) Date de publication de la demande: 06.01.2021
(73) Titulaire: Lohr Industrie, 67980 Hangenbieten (FR)
(72) Inventeur: LEBRETON, Fabien, 67980 HANGENBIETEN (FR); ANDRE, Jean-Luc, 67120 MOLSHEIM (FR)
(74) Mandataire: Merckling, Norbert

(56) Documents cités:
- EP-A1- 0 381 605
- EP-A1- 0 906 848
- CN-U- 208 867 929
- FR-A1- 2 618 394

## Description

### Domaine technique

La présente invention se rapporte au domaine technique général des véhicules ou ensembles routiers du genre porte-voitures comprenant notamment au moins une remorque ou une semi-remorque, équipée d'un plateau de chargement inférieur et d'un plateau de chargement supérieur.

L'invention concerne plus généralement une unité routière comportant un plateau de chargement supérieur optimisé, présentant des fonctionnalités nouvelles de manière à améliorer les performances de chargement et d'imbrication de charges.

Il est connu d'équiper une remorque ou une semi-remorque d'un plateau de chargement supérieur articulé sur le châssis de la remorque ou semi-remorque. Un tel plateau de chargement supérieur est généralement porté par un système de levage pour permettre l'inclinaison vers l'arrière dudit plateau à des fins de chargement, le levage dudit plateau pour libérer le passage sous ledit plateau de chargement supérieur dans l'espace de chargement inférieur et l'ajustement en hauteur dudit plateau de chargement supérieur une fois chargé.

Un tel plateau de chargement supérieur connu est monté coulissant sur le système de levage pour ajuster la longueur de chargement, ajuster l'imbrication des voitures chargées sur les niveaux inférieur et supérieur et pour abaisser ledit plateau à vide en raison de contraintes règlementaires.

Un tel plateau de chargement supérieur connu est équipé de trois gerbeurs dont chacun est destiné à supporter une voiture. Ces trois gerbeurs sont inclinables vers le haut et vers le bas par rapport au dit plateau pour permettre, à plat, la circulation de voitures et le chargement d'un véhicule long porté par plusieurs gerbeurs. Ces trois gerbeurs, inclinés, permettent d'imbriquer les voitures chargées dans des longueurs règlementaires et de faciliter certaines phases de chargement.

Généralement, le gerbeur avant est monté coulissant sur le plateau de chargement supérieur pour allonger ledit plateau, pour faire la jonction avec un plateau de chargement d'un véhicule tracteur et pour ajuster la longueur du plateau en fonction du chargement et faciliter certaines phases de chargement.

Ces plateaux de chargement supérieurs connus ne sont cependant pas dépourvus d'inconvénients.

En effet, l'écartement entre le gerbeur central et le gerbeur arrière n'est pas ajustable. Malgré la possibilité d'incliner ver le haut et vers le bas les trois gerbeurs et la possibilité de déplacer par coulissement l'intégralité du plateau, il est impossible de réaliser certaines configurations de chargement, notamment avec des véhicules comportant une cabine haute.

En outre, il n'est pas possible de conduire un véhicule sur un niveau supérieur de chargement d'un véhicule tracteur en partant du sol et en utilisant le plateau de chargement supérieur de la remorque ou semi-remorque avec une inclinaison acceptable.

Il est par ailleurs difficile d'ajuster et d'optimiser la position de la dernière voiture au-dessus d'un capot de la voiture précédente. Le dernier gerbeur devra présenter un angle d'inclinaison important qu'il est difficile voire impossible de gravir compte tenu des porte-à-faux avant des voitures, des spoilers par exemple. Dans le cas où l'on ne peut pas gravir cette dernière rampe, l'opérateur doit faire patiner l'embrayage et accéder au véhicule dans des positions non ergonomiques voire dangereuses. Lorsque l'opérateur quitte la voiture dans une telle position très inclinée, son seul maintien est le frein de parc. La sécurisation par calage et par sangle doit se faire dans une position très dangereuse.

On connaît également par l'intermédiaire du document FR 2 618 394, une unité routière porte-voitures comportant un plateau de chargement inférieur et supérieur équipés de gerbeurs. Ces derniers sont inclinables mais pas déplaçables les uns par rapport aux autres. En outre, ces gerbeurs sont équipés de prolongations temporaires et ne permettent pas le chargement à plat des voitures.

L'objet de la présente invention vise par conséquent à pallier les inconvénients de l'art antérieur et à fournir une nouvelle unité routière porte-voitures comportant un plateau de chargement supérieur pour un ensemble routier porte-voitures.

Un autre objet de la présente invention vise à proposer un nouveau plateau de chargement équipé de gerbeurs présentant davantage de positionnements mutuels.

Un autre objet de la présente invention vise à proposer une nouvelle unité routière porte-voitures comportant un plateau de chargement supérieur optimisé permettant d'améliorer les capacités de chargement et d'imbrication.

Un autre objet de la présente invention vise à proposer une nouvelle remorque ou semi-remorque équipée d'un plateau de chargement supérieur optimisé.

Un autre objet de l'invention vise à faciliter et à sécuriser les opérations de chargement et de déchargement.

Les objets assignés à la présente invention sont atteints à l'aide d'une unité routière porte-voitures comportant un châssis équipé d'au moins un essieu, un niveau de chargement inférieur localisé au niveau du châssis, un plateau de chargement supérieur lié au châssis par l'intermédiaire des systèmes de levage avant et arrière pour déplacer en hauteur et incliner ledit plateau de chargement supérieur, lequel comporte un gerbeur avant, un gerbeur central et un gerbeur arrière de préférence inclinables, pouvant porter chacun une voiture, ledit gerbeur avant (9) étant monté sur le plateau de chargement supérieur par l'intermédiaire de tiroirs latéraux coulissants avant et d'actionneurs avant de manière à pouvoir ajuster l'écartement entre le gerbeur avant et le gerbeur central, caractérisé en ce que le gerbeur arrière est monté sur le plateau de chargement supérieur par l'intermédiaire de tiroirs latéraux coulissants arrière et d'actionneurs arrière latéraux de manière à pouvoir ajuster l'écartement entre le gerbeur arrière et le gerbeur central.

Selon un exemple de réalisation, le gerbeur central est monté sur le plateau de chargement supérieur par l'intermédiaire de tiroirs latéraux coulissants centraux et d'actionneurs centraux de manière à pouvoir ajuster son écartement par rapport au gerbeur arrière et par rapport au gerbeur avant.

Selon un exemple de réalisation, le plateau de chargement supérieur est monté coulissant sur les systèmes de levage de manière à pouvoir se déplacer par rapport aux systèmes de levage d'avant en arrière et inversement grâce à des actionneurs additionnels, pour ajuster la position du plateau de chargement supérieur par rapport au châssis et par rapport à un véhicule tracteur.

Selon un exemple de réalisation, le système de levage comprend de chaque côté latéral du châssis, un bras de levage articulé avant et un bras de levage articulé arrière et des actionneurs de levage correspondants.

Selon l'invention, le plateau de chargement supérieur comporte deux longerons reliés grâce à des traverses transversales, chacun des longerons présentant une forme creuse avec une face ouverte en regard de l'autre longeron, les tiroirs latéraux coulissants arrières étant logés dans les formes creuses.

Selon l'invention, les tiroirs coulissants arrière présentent une forme tubulaire dans laquelle sont logés au moins en partie l'actionneur arrière qui lui est associé ainsi qu'au moins une partie de circuits électriques et/ou hydrauliques correspondants.

Selon l'invention, les tiroirs latéraux coulissants arrières et les longerons comportent des organes de retenu pour empêcher lesdits tiroirs latéraux coulissants arrière de s'extraire latéralement de la forme creuse via la face ouverte.

Selon un exemple de réalisation, les bras articulés arrière du système de levage comportent à leur extrémité supérieure, un palier de coulissement dans lequel est engagé et guidé le longeron correspondant, ledit palier de coulissement et ledit longeron comportant des organes de retenu pour empêcher ledit longeron de s'extraire latéralement dudit palier de coulissement.

Selon un exemple de réalisation, au moins le gerbeur arrière comporte une partie télescopique avant et ou arrière, associée(s) à un actionneur d'allongement pour ajuster la longueur dudit gerbeur.

Selon un autre exemple de réalisation, au moins un des gerbeurs avant, central et arrière comporte une partie télescopique avant associée(s) à un actionneur d'allongement pour ajuster la longueur dudit gerbeur.

Selon un autre exemple de réalisation, au moins un des gerbeurs avant, central et arrière, comporte une partie télescopique arrière associée(s) à un actionneur d'allongement pour ajuster la longueur dudit gerbeur.

Selon un exemple de réalisation, chacun des gerbeurs avant, central et arrière est associé à un système d'inclinaison individuel pour ajuster son inclinaison par rapport au plateau de chargement supérieur.

Selon un exemple de réalisation, l'unité routière constitue une remorque ou une semi-remorque.

L'unité routière porte-voitures conforme à l'invention présente l'énorme avantage d'augmenter substantiellement les configurations d'imbrication des voitures sur l'unité routière.

Un autre avantage réside dans l'optimisation des espaces de chargement, notamment grâce aux possibilités d'ajustement des écarts entre les gerbeurs, en plus de leurs inclinaisons individuelles.

Un autre avantage réside dans une simplification et dans une sécurisation de certaines opérations de chargement du véhicule tracteur. En effet, les nouvelles possibilités de positionnement et d'inclinaison du plateau de chargement supérieur permettent charger les voitures dans l'espace de chargement supérieur, en position haute sur le véhicule tracteur, en partant directement du sol avec lesdites voitures et en les conduisant sur le véhicule tracteur via le plateau de chargement supérieur utilisé comme rampe fixe dont l'inclinaison est acceptable, de préférence inférieure à 15%.

Un autre avantage remarquable de l'invention réside dans l'ajustement de l'écartement entre le gerbeur arrière et le gerbeur central. En effet, contre toute attente, cet ajustement est réalisable malgré l'absence d'espace disponible pour y loger des moyens d'actionnement. Une telle contrainte, importante est en outre accentuée par la nécessité impérative de libérer au maximum l'espace localisé entre les longerons du plateau de chargement supérieur pour ne pas entraver l'inclinaison vers le haut et vers le bas de chacun des gerbeurs montés entre lesdits longerons. L'intégration de moyens d'actionnement dans les longerons permet ainsi de libérer l'espace central sur le plateau de chargement supérieur pour effectuer les opérations d'imbrication des véhicules chargés sur leur gerbeur respectif.

Un autre avantage de l'invention réside dans l'obtention d'une longueur plus faible du plateau de chargement supérieur dépourvu de charges, un écartement plus important du véhicule tracteur et par conséquent d'un espace de chargement plus grand sur ledit véhicule tracteur. Une charge plus grande peut donc être disposée sur le véhicule tracteur.

Un autre avantage de l'invention réside dans la possibilité de déplacer les gerbeurs chargés, après voir incliné les voitures sur leur gerbeur et réaliser ainsi une imbrication optimale. Un ajustement de positions entre gerbeurs est possible à tout moment tout en laissant les voitures arrimées à leur gerbeur.

L'imbrication est pilotée par un opérateur au sol, lequel commande les actionneurs correspondants en se positionnant au mieux pour surveiller les manoeuvres d'imbrication des voitures.

### Brève description des figures

D'autres caractéristiques et avantages de l'invention apparaîtront à la lecture de la description détaillée qui va suivre, donnés à titre d'exemple illustratifs et non limitatifs, description faite en référence aux dessins annexés, dans lesquels :
- la figure 1 est une illustration d'un ensemble routier comportant une unité routière porte-voitures conforme à l'invention, à vide, avec gerbeurs avant et arrière rentrés et plateau de chargement supérieur en position basse,
- la figure 2 est une illustration de l'unité routière porte-voitures de la figure 1, avec un exemple de chargement, avec gerbeurs avant et arrière sortis et plateau de chargement supérieur en position haute,
- la figure 3 est une vue partielle et en perspective d'un exemple de réalisation d'un plateau de chargement supérieur d'une unité routière porte-voitures conforme à l'invention,
- la figure 4 est une autre vue partielle et en perspective d'un exemple de réalisation d'un plateau de chargement supérieur d'une unité routière porte-voitures conforme à l'invention,
- la figure 5 est une illustration partielle et agrandie, en perspective, du plateau de chargement supérieur de la figure 4,
- la figure 6 est une vue agrandie selon un plan de coupe VI de la figure 5, d'un exemple de réalisation d'un longeron du plateau de chargement supérieur,
- la figure 7 est une autre vue partielle et en perspective d'un plateau de chargement conforme à l'invention,
- la figure 8 représente un détail agrandi de la figure 7,
- les figures 9 à 12 illustrent un exemple de chargement d'un ensemble routier comprenant une unité routière porte-voitures conforme à l'invention,
- les figures 13 et 14 illustrent, une variante du chargement de l'unité routière porte-voitures,
- les figures 15a à 15d illustrent avec des vues partielles et en perspective un exemple de réalisation d'un plateau de chargement supérieur d'une unité routière porte-voitures conforme à l'invention avec différentes positions et configuration du gerbeur arrière,
- les figures 16a à 16d sont des vues de profil en coupe longitudinale du plateau de chargement supérieur illustré respectivement aux figures 15a à 15d,
- la figure 16e est un agrandissement d'un détail G de la figure 16a, et
- la figure 17 est vue en coupe selon le plan XVII-XVII de la figure 16d.

### Exposé détaillé de l'invention

Dans la suite, les éléments représentés sur plusieurs figures, lesquels sont structurellement et fonctionnellement identiques comportent les mêmes références numériques ou alphanumériques.

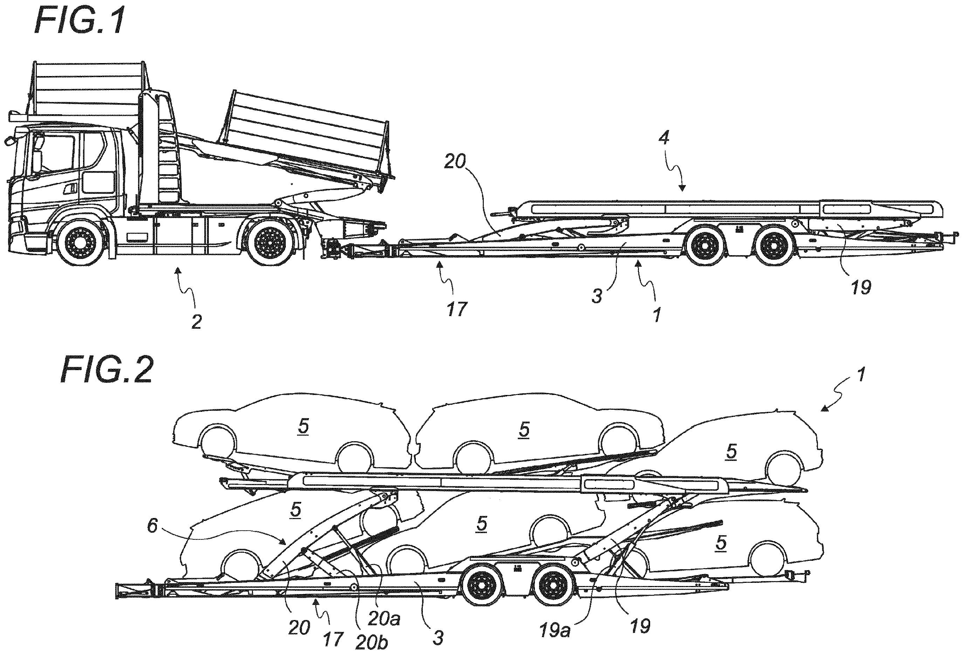

La figure 1 est une illustration d'un ensemble routier comprenant une unité routière 1, du genre remorque, attelée à un véhicule tracteur 2 du genre camion. Il s'agit plus particulièrement d'un ensemble routier porte voiture destiné à transporter des voitures d'une part sur la remorque et d'autre part sur le véhicule tracteur 2. Les charges transportées préférentiellement par l'ensemble routier tel que décrit seront désignés dans la suite comme des voitures 5 ou des véhicules. Par voitures 5 ou véhicules, il faut entendre bien entendu tout type de voitures personnelles ou familiales ou des véhicules professionnels / utilitaires. Des charges autres que de voitures 5 peuvent aussi être transportées par l'unité routière 1.

L'unité routière 1 une comporte un plateau de chargement inférieur 3 et un plateau de chargement supérieur 4. L'unité routière 1 est illustrée à la figure 1 dans une configuration de transport dépourvue de voitures 5. Le plateau de chargement supérieur 4 se trouve donc dans une position abaissée au voisinage du plateau de chargement inférieur 3.

La figure 2 est une illustration de l'unité routière 1 de la figure 1 à avec un chargement comprenant six voitures 5. Le plateau de chargement supérieur 4 comporte ainsi trois voitures 5 et le plateau de chargement inférieur 3 comporte également trois voitures 5. Le plateau de chargement supérieur 4 est relevé dans une position de chargement par l'intermédiaire de systèmes de levage 6 avant et arrière.

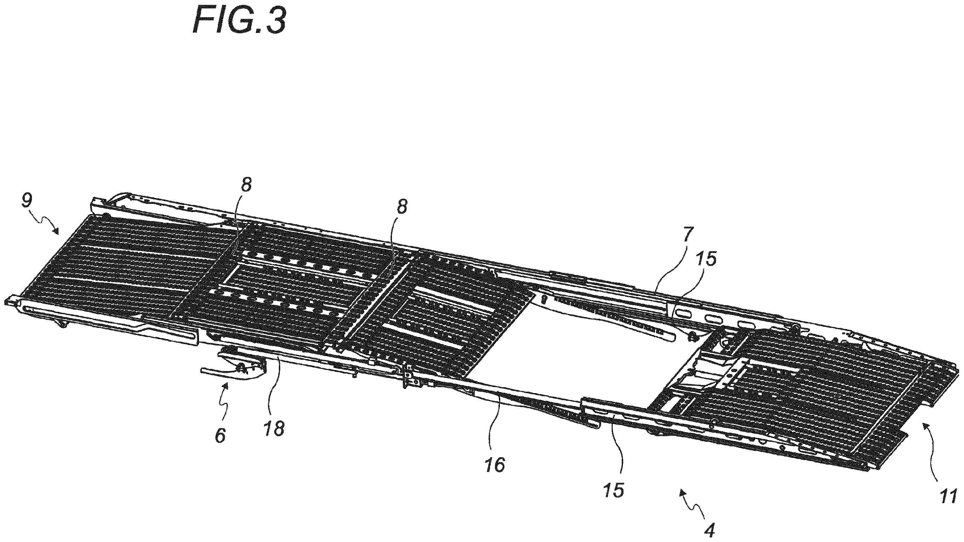

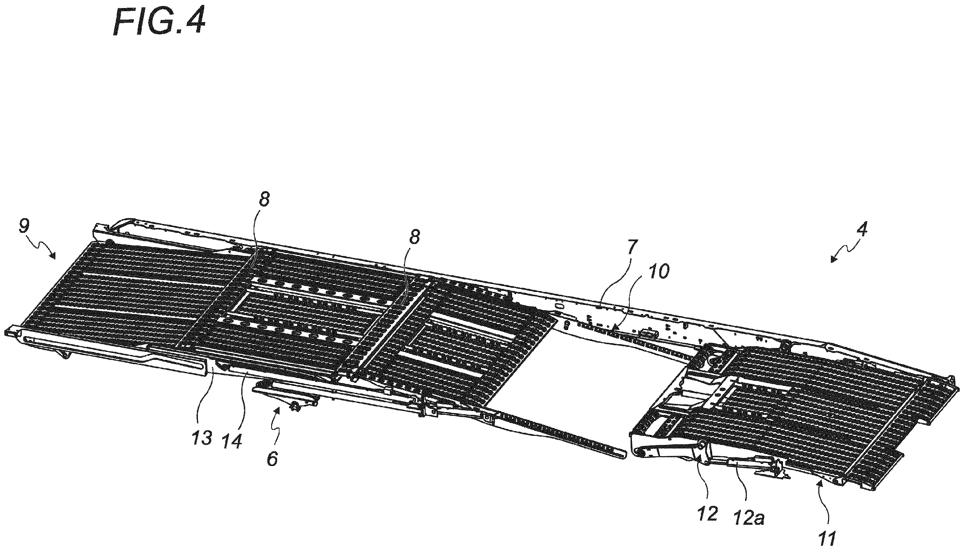

La figure 3 est une vue partielle et en perspective d'un exemple de réalisation du plateau de chargement supérieur 4 et la figure 4 est une autre vue partielle et en perspective dudit plateau de chargement supérieur 4.

Le plateau de chargement supérieur 4 comporte des longerons 7 sur chaque côté longitudinal et des traverses 8 transversales reliant entre eux lesdits longerons 7. Le plateau de chargement supérieur 4 comprend également un gerbeur avant 9, un gerbeur central 10 et un gerbeur arrière 11 destiné chacun à supporter une voiture 5.

Les gerbeurs avant 9, central 10 et arrière 11, ou une partie desdits gerbeurs, sont avantageusement inclinables chacun individuellement vers le haut et vers le bas par rapport au plateau de chargement supérieur 4. Chacun des gerbeurs avant 9, central 10 et arrière 11 est par conséquent équipé d'un système d'inclinaison. Ce dernier comprend par exemple des actionneurs 12 associés à des cames d'actionnement 12a, de part et d'autre de chacun des gerbeurs avant 9, central 10 et arrière 11.

Le gerbeur avant 9 est avantageusement monté sur le plateau de chargement supérieur 4 par l'intermédiaire de tiroirs latéraux coulissants avant 13 lesquels sont déplacés en translation dans le plateau de chargement supérieur 4 par l'intermédiaire d'actionneurs avant 14 et ce de chaque côté dudit gerbeur avant 9. Il est ainsi possible d'ajuster l'écartement entre le gerbeur avant 9 et le gerbeur central 10 et ce indépendamment de leur inclinaison respective.

Le gerbeur arrière 11 est monté sur le plateau de chargement supérieur 4 par l'intermédiaire de tiroirs latéraux coulissants arrière 15. Chacun des tiroirs latéraux coulissants arrière 15 et actionné par un actionneur arrière 16 du genre vérin hydraulique. L'écartement entre le gerbeur arrière 11 et le gerbeur centrale 10 peut ainsi être ajusté et adapté aux voitures 5 de manière à optimiser l'imbrication desdites voitures 5

Selon un autre exemple de réalisation de l'unité routière 1, le gerbeur centrale 10 peut également être monté sur le plateau de chargement supérieur 4 par l'intermédiaire de tiroirs latéraux coulissants centraux actionnés par des actionneurs correspondants, de manière à pouvoir ajuster son écartement par rapport au gerbeur arrière 11 et par rapport aux gerbeur avant 9.

Le système de levage 6 est articulé sur un châssis 17 pour déplacer en hauteur et pour incliner le plateau de chargement supérieur 4 par rapport au châssis 17. Ceci permet notamment de libérer un espace de chargement sur le plateau de chargement inférieur 3 lorsque le plateau de chargement supérieur 4 et disposé dans une position haute.

Le plateau de chargement supérieur 4 est avantageusement monté coulissant sur système de levage 6, lequel est par exemple partiellement représenté aux figures 3 et 4, de manière à pouvoir se déplacer par rapport au système de levage 6 d'avant en arrière et inversement. Un tel déplacement est obtenu par l'intermédiaire d'actionneurs additionnels 18 intégrés dans les longerons 7 et permet d'ajuster la position du plateau de chargement supérieur 4 par rapport au châssis 17.

A titre d'exemple, le système de levage 6 comprend de chaque côté latéral du châssis 17, un bras de levage articulé arrière 19 et un bras de levage articulé avant 20 ainsi que des actionneurs correspondants pour soulever et abaisser lesdits bras de levage articulés avant 20 et arrière 19.

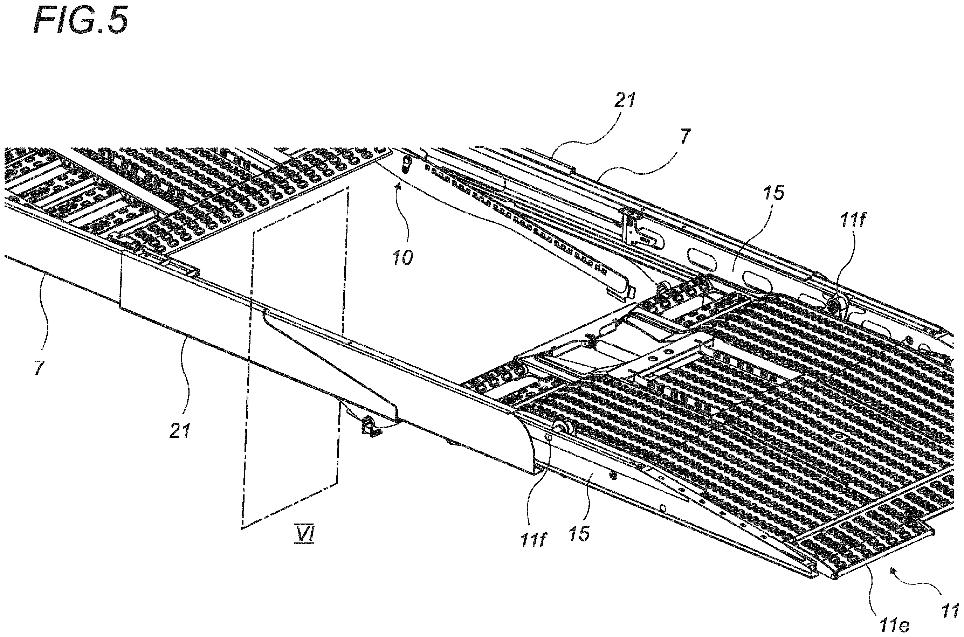

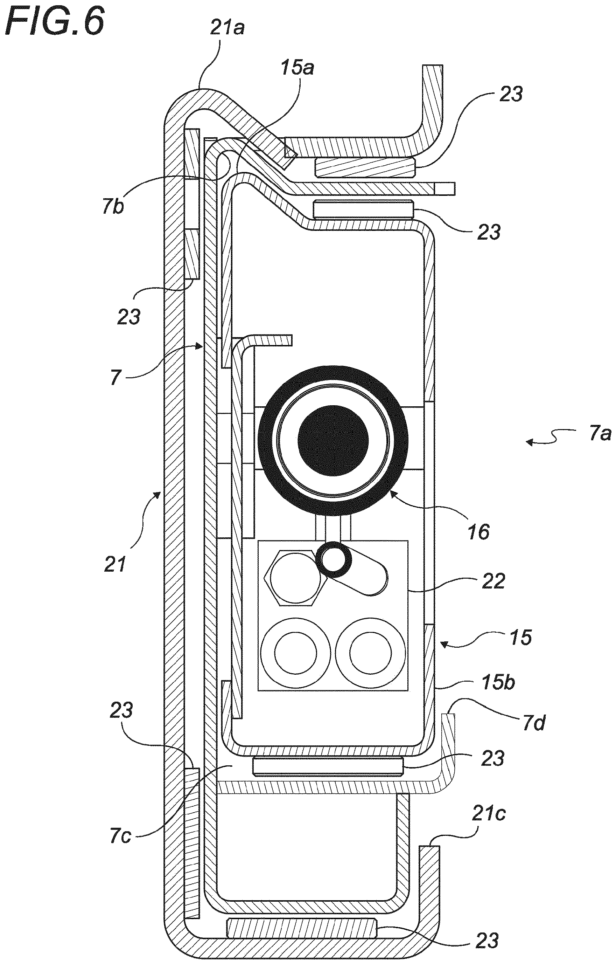

La figure 5 est une autre illustration partielle et en perspective, d'un plateau de chargement supérieur 4 de l'unité routière 1. La figure 6 est une vue agrandie selon en plans de coupe VI de la figure 5.

La figure 5 montre plus particulièrement les tiroirs latéraux coulissants arrière 15 montés coulissant dans les longerons 7. Ces derniers sont montés coulissants sur le système de levage 6 et plus précisément sur les extrémités supérieures des bras de levage articulés arrière 19 et avant 20. La liaison articulée entre le bras de levage articulé arrière 19 et le longeron 7 est réalisée par l'intermédiaire d'un palier de coulissement 21 articulé sur l'extrémité du bras levage arrière 19 et ce de chaque côté latéral du plateau de chargement supérieur 4. Un actionneur 19a du genre vérin hydraulique est monté entre le châssis 17 et le bras de levage arrière 19 pour déplacer ledit bras.

Le bras de levage avant 20 est déplacé par l'intermédiaire d'un actionneur complémentaire 20a monté entre le châssis 17 et ledit bras. Une bielle 20b est en outre articulée sur le châssis 17 et sur le bras de levage avant 20. Le positionnement optimisé des différentes articulations permet au point haut du bras de levage avant 20, articulé sur le plateau de chargement supérieur 4, de décrire une trajectoire presque verticale. L'extrémité basse du bras de levage 20 coulisse avantageusement dans une glissière prévue à cet effet dans le châssis 17. L'articulation du point haut du bras de levage avant 20 se fait également par l'intermédiaire d'un palier de coulissement 21 avec lequel est relié au longeron 7 par les actionneurs additionnels 18, permettant d'assurer le déplacement longitudinal du plateau de chargement supérieur 4.

Chaque longeron 7 illustré par exemple à la figure 6, présente avantageusement une forme creuse 7c avec une face ouverte 7a en regard de l'autre longeron 7 disposé de l'autre côté de du plateau de chargement supérieur 4. Les tiroirs latéraux coulissants arrière 15 sont ainsi logés dans la forme creuse 7c du longeron 7.

Les tiroirs coulissants latéraux 15 présentent avantageusement une forme tubulaire 15b dans laquelle est logé au moins en partie l'actionneur arrière 16 qui lui est associé ainsi qu'au moins une partie de circuits électriques et hydrauliques correspondants 22.

Avantageusement, les tiroirs coulissants latéraux arrière 15 et les longerons 7 comportent des organes de retenu pour empêcher lesdits tiroirs 15 de s'extraire de la forme creuse 7c via la face ouverte 7a.

Les longerons 7, grâce des organes de retenu additionnels, sont empêchés de s'extraire du palier de coulissement 21.

Les organes de retenu sont par exemple réalisés avec une saillie 15a sur les tiroirs coulissants latéraux arrière 15 et grâce à une forme en creux 7b sensiblement complémentaire, prévue sur le longeron 7. Cette forme en creux 7b présente également du côté extérieur du longeron 7, un bossage en saillie, lequel est engagé dans une forme en creux complémentaire 21a prévue sur le palier de coulissement 21 et constituant ainsi une butée.

Selon le mode de réalisation, représenté à la figure 6, les organes de retenu comportent également au moins un pli 7d, dirigé vers le haut au niveau de l'extrémité intérieure du longeron 7, le long de la face intérieure et inférieure de la forme tubulaire 15b.

Selon un autre mode de réalisation, le longeron 7 présente un pli dirigé vers le bas, non représenté, à son extrémité supérieure et intérieure, en remplacement de la forme en creux 7b. Le longeron 7 présente alors une forme en C, selon une section transversale.

Un déplacement du plateau de chargement supérieur 4 et plus précisément du longeron 7 dans le palier de coulissement 21, de même qu'un coulissement du tiroir latéral coulissant arrière 15 dans le longeron 7 peuvent donc être effectués de façon guidée et sans risque de déboîtement. La stabilité mécanique de l'ensemble du système de chargement et donc de l'unité routière 1 est donc assurée.

Les coulissements relatifs entre le palier de coulissement 21, le longeron 7 et le tiroir de coulissement latéral arrière 15, sont améliorés par l'intermédiaire de patins de coulissement 23. Ces derniers sont avantageusement réalisés en matériaux synthétiques du genre polyamide, bronze ou autres.

Le gerbeur avant 9 présente avantageusement par exemple une partie télescopique associée à un actionneur d'allongement pour ajuster la longueur dudit gerbeur avant 9.

Selon un autre exemple de réalisation de l'unité routière 1, le gerbeur central et 10 et/ou le gerbeur arrière 11 sont également équipés d'une partie télescopique avant ou arrière.

L'allongement par l'intermédiaire d'une partie télescopique sur l'un au moins ou sur tous les gerbeurs 9, 10, 11 s'effectue par exemple vers l'avant, vers l'arrière ou dans les deux sens.

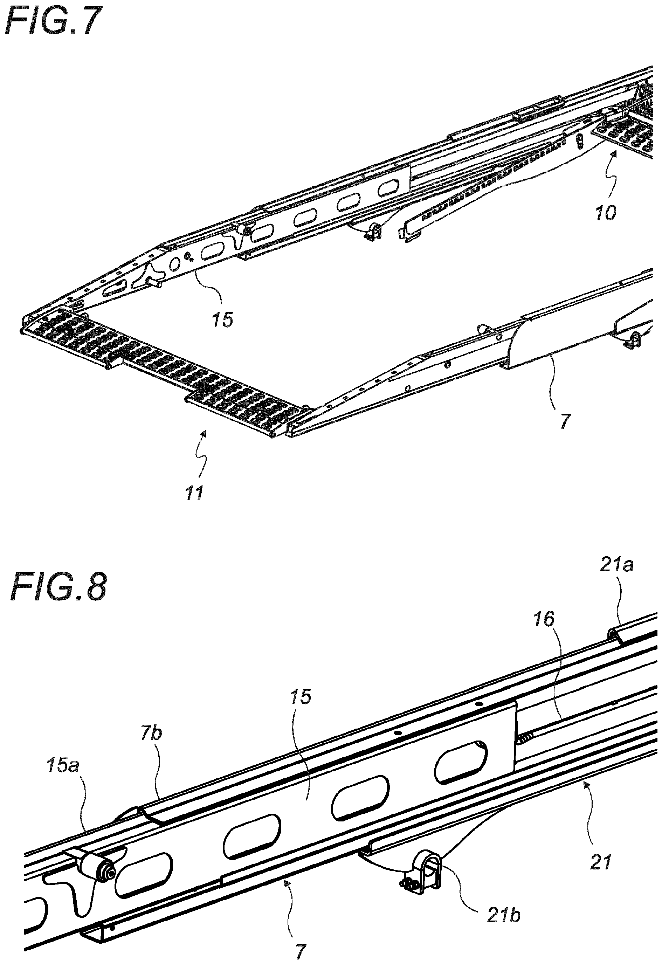

La figure 7 est une autre vue partielle et en perspective du plateau de chargement supérieur 4 de la figure 5 et la figure 8 représente un détail agrandi de la figure 7.

La figure 8 montre ainsi plus en détail le positionnement relatif entre le palier de coulissement 21 avec la forme en creux complémentaire 21a sur son côté supérieur et un point d'articulation 21b coopérant avec l'extrémité supérieure du bras de levage arrière 19 du système de levage 6 arrière.

La figure 8 illustre également plus précisément la forme en creux 7b prévue sur le longeron 7 et permettant de retenir le tiroir latéral coulissant arrière 15 présentant la forme saillie 15a.

Aux figures 4 à 8, le gerbeur central 10 et/ou le gerbeur arrière 11 sont avantageusement présentés avec une partie centrale vide à des fins de clarté de la présentation. Des platelages de roulement, non représentés, sont bien évidemment destinés à combler ce vide.

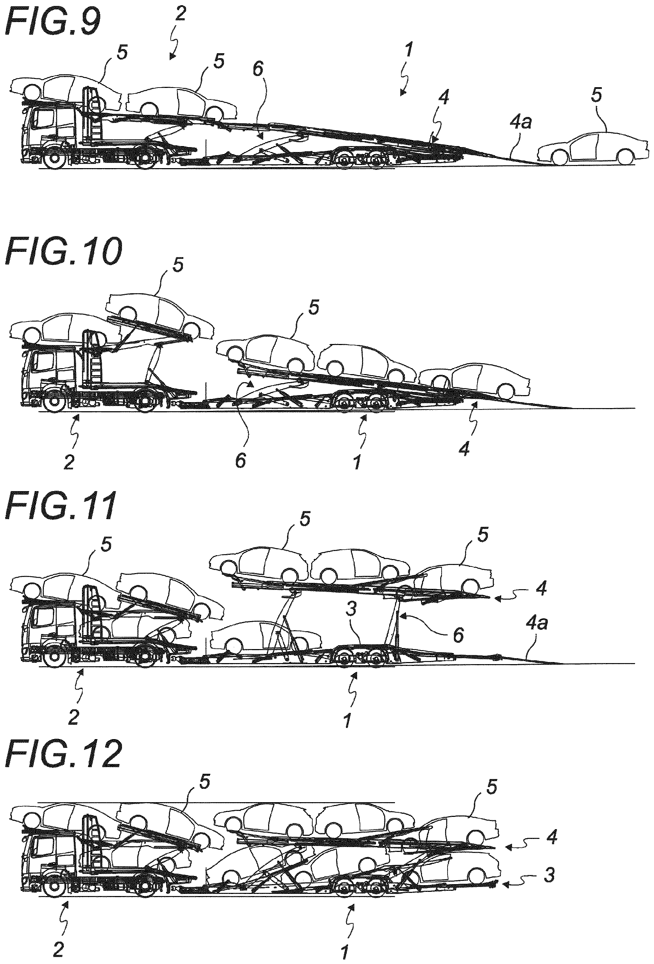

Les figures 9 à 12 illustrent un exemple de chargement d'un ensemble routier comprenant une unité routière 1 équipée de son plateau de chargement supérieur 4. Ainsi, à la figure 9, le véhicule tracteur 2 est chargé en utilisant le plateau de chargement supérieur 4 dans une position inclinée et translatée vers l'arrière pour permettre un accès aux voitures 5 du sol à la structure de chargement supérieur du véhicule tracteur 2.

La partie télescopique du gerbeur avant 9 est dans sa position d'extension maximale et ledit gerbeur avant 9 est disposé dans un position extrême avant par l'intermédiaire de tiroirs coulissants. Il est donc possible d'effectuer la jonction entre le plateau de chargement supérieur 4 incliné et la structure supérieure de chargement du véhicule tracteur 2 avec une inclinaison acceptable du plateau de chargement supérieur 4.

A la figure 10, il apparaît que le plateau de chargement supérieur 4 est rabaissé pour le charger de trois voitures 5, tandis que l'imbrication des voitures 5 sur le véhicule tracteur 2 est optimisée par l'inclinaison notamment du second véhicule. Dans cette phase de chargement, les deux dernières voitures 5 du plateau de chargement supérieur 4 sont à plat, c'est-à-dire qu'elles sont dans l'alignement dudit plateau. Le chargement est ainsi plus facile et l'opérateur est davantage en sécurité pour caler et sangler les voitures 5 et pour sortir des voitures 5 une fois chargées sur le plateau de chargement supérieur 4. La pente à gravir la hauteur de sortie de voiture 5 sont moins importantes.

À la figure 11, on procède au soulèvement du plateau de chargement supérieur 4 chargé par trois véhicules voitures 5 de manière à pouvoir charger le plateau de chargement inférieur 3 de l'unité routière 1 ainsi que la structure de chargement inférieure du véhicule tracteur 2. Les voitures 5, une fois chargées sur le véhicule tracteur 2 et sur l'unité routière 1, sont ensuite inclinées vers le haut ou vers le bas pour optimiser l'imbrication des voitures 5 et ce grâce au gerbeurs 9,10,11 inclinables et déplaçables individuellement.

Il ressort, notamment de la figure 12, que la dernière voiture 5 chargée sur le plateau de chargement supérieur 4, doit être positionnée de façon précise par rapport aux autre voitures 5 du haut mais également par rapport aux voitures 5 chargées sur le plateau de chargement inférieur 3. Il est donc important d'être totalement libéré des organes d'actionnement permettant le gerbage vers le haut et vers le bas et l'imbrication des voitures 5.

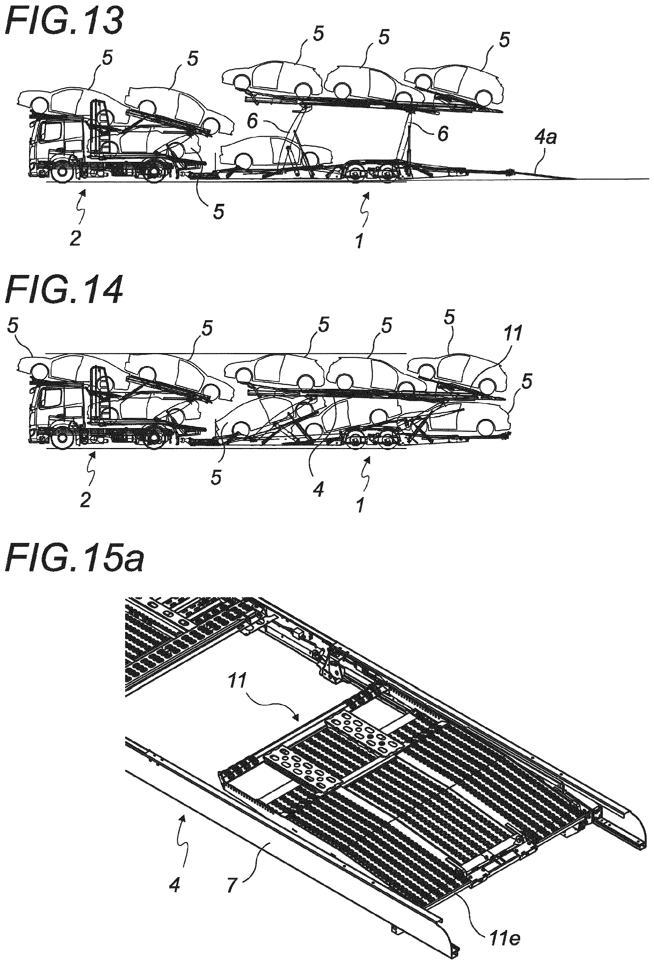

Les figure 13 et 14 illustrent une variante du chargement de celui précédent illustré aux figures 11 et 12. Dans cette variante de chargement, la dernière voiture 5 est chargée sur le plateau de chargement supérieur 4 et plus précisément sur le gerbeur arrière 11 est inclinée vers le haut tandis que à la figure 12, cette voiture 5 est inclinée vers le bas.

D'autres organes de retenu, connus en tant que tel, peuvent également être prévus pour assurer le guidage et le maintien en emboîtement du longeron 7 dans le palier de coulissement 21 et du tiroir de coulissement arrière latéral 15 dans le dit longeron 7. Ces organes de retenu peuvent comprendre notamment des bords périphériques de guidage repliés 21c comme on peut l'apercevoir à titre d'exemple à la figure 6.

Les longerons 7, les tiroirs coulissants latéraux arrière 15 de même que le palier de coulissement 21 sont avantageusement réalisés avec des tôles pliées dont l'épaisseur et choisie pour assurer sa rigidité et la stabilité mécanique de l'ensemble ou avec des profilés tubulaires ou autres. Ces géométries ont l'avantage de présenter une raideur en torsion et une rigidité latérale augmentant la stabilité en roulage.

Avantageusement, au moins un des gerbeurs avant 9, central 10 et arrière 11 comporte une partie télescopique avant et/ou arrière associée(s) à un actionneur d'allongement correspondant pour ajuster la longueur dudit gerbeur 9, 10, 11. Un actionneur d'inclinaison peut également être prévu pour chacun de gerbeurs 9, 10, 11.

Les figures 15a à 15d illustrent, avec des vues partielles et en perspective, un autre exemple de réalisation d'un plateau de chargement supérieur 4 avec différentes positions et configuration du gerbeur arrière 11.

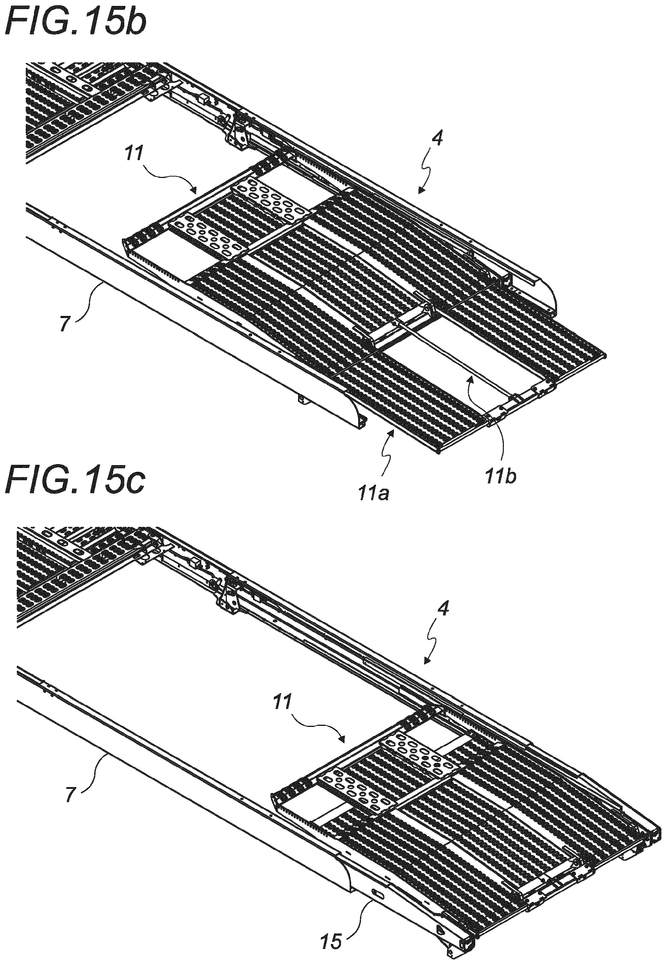

A la figure 15a, le gerbeur arrière 11 est dans un configuration compacte et dans une position rentrée dans le plateau de chargement supérieur 4. A le figure 15b, le gerbeur arrière 11 est dans une configuration d'extension dans laquelle une partie télescopique arrière, appelée extension 11a rétractable, est sortie grâce à un actionneur d'allongement 11b logé dans ledit gerbeur arrière 11.

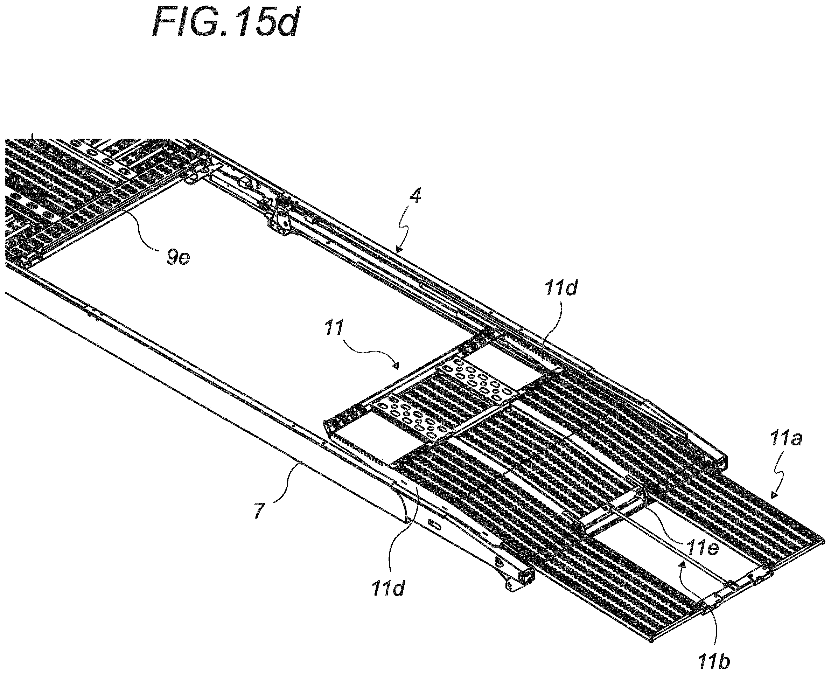

A la figure 15c, le gerbeur arrière 11 est dans une configuration compacte et dans une position sortie dans le plateau de chargement supérieur 4. Dans cette position de sortie, le gerbeur arrière 11 présente des tiroirs latéraux coulissants arrière 15 partiellement en saillie sur les longerons 7. A la figure 15d, le gerbeur arrière 11 est d'une part dans la position sortie et d'autre part dans une configuration d'extension dans laquelle l'extension 11a est sortie grâce à l'actionneur d'allongement 11b.

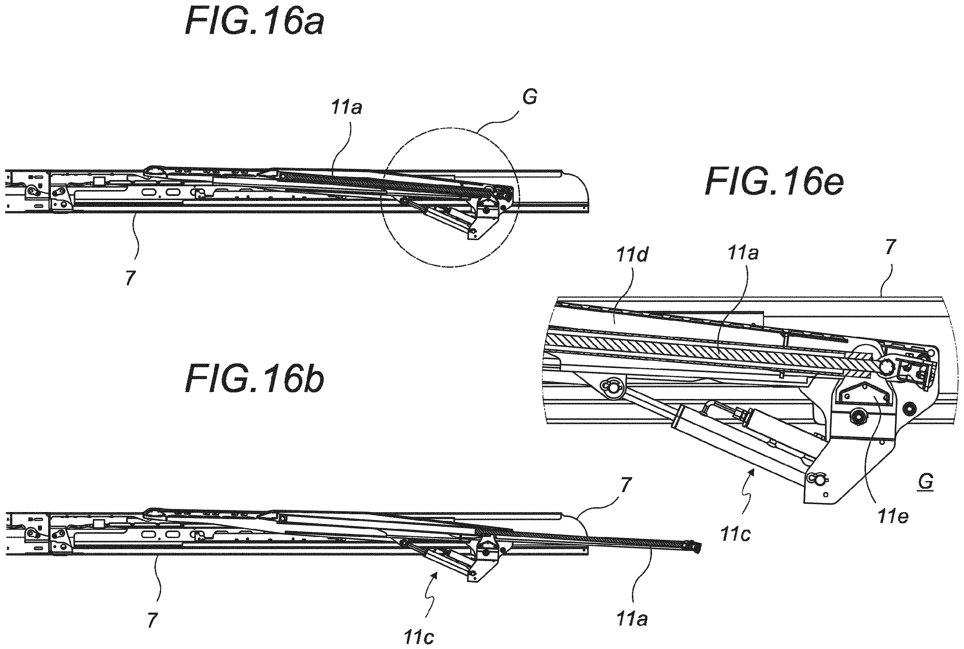

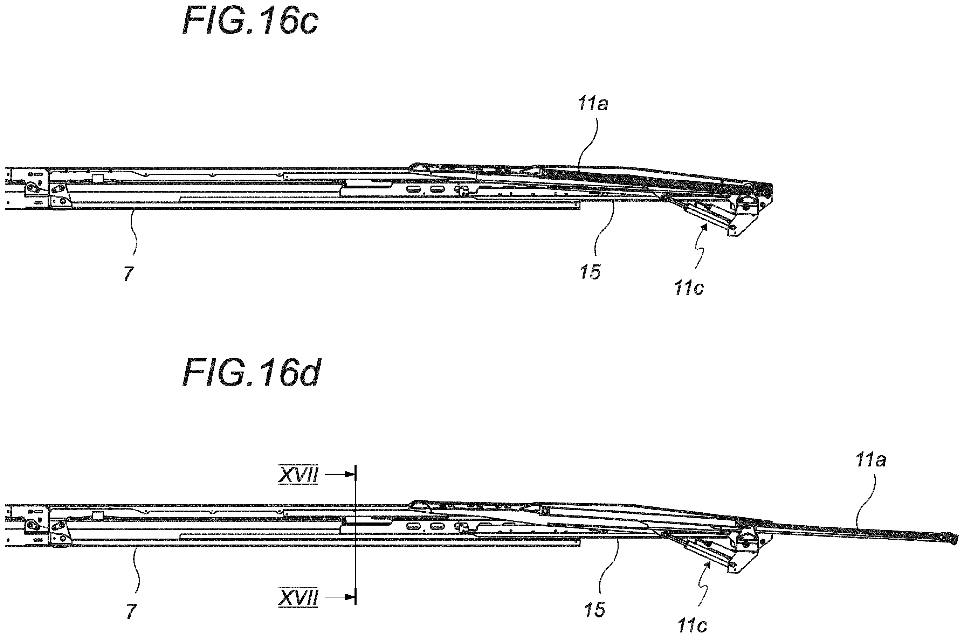

Les figures 16a à 16d sont des vues de profil, en coupe longitudinale du plateau de chargement supérieur 4 des figures 15a à 15d, avec le gerbeur arrière 11 dans les mêmes configurations et positions que celles illustrées respectivement aux dites figure 15a à 15d.

La figure 16e est un agrandissement d'un détail G de la figure 16a cet agrandissement G montre le gerbeur arrière 11 comportant son extension 11a et un actionneur d'inclinaison 11c pour incliner ledit gerbeur arrière 11 par rapport au plan de chargement supérieur 4. Le gerbeur arrière 11 est donc monté coulissant et pivotant dans son intégralité sur le plateau de chargement supérieur 4.

Le gerbeur arrière 11 comporte des longerons de gerbeur 11d situés de part et d'autre dudit gerbeur arrière 11, lesquels sont avantageusement reliés entre elles par au moins une traverse de gerbeur 11e. La traverse de gerbeur 11e améliore la rigidité structurelle dudit gerbeur arrière 11. Les logerons de gerbeur 11d sont montés pivotants sur les tiroirs coulissants latéraux arrière 15 grâce à des pivots 11f.

Selon un exemple de réalisation préférentiel, il en est de même pour tous les gerbeurs avant 9 et central 10, lesquels présentent une construction identique ou similaire.

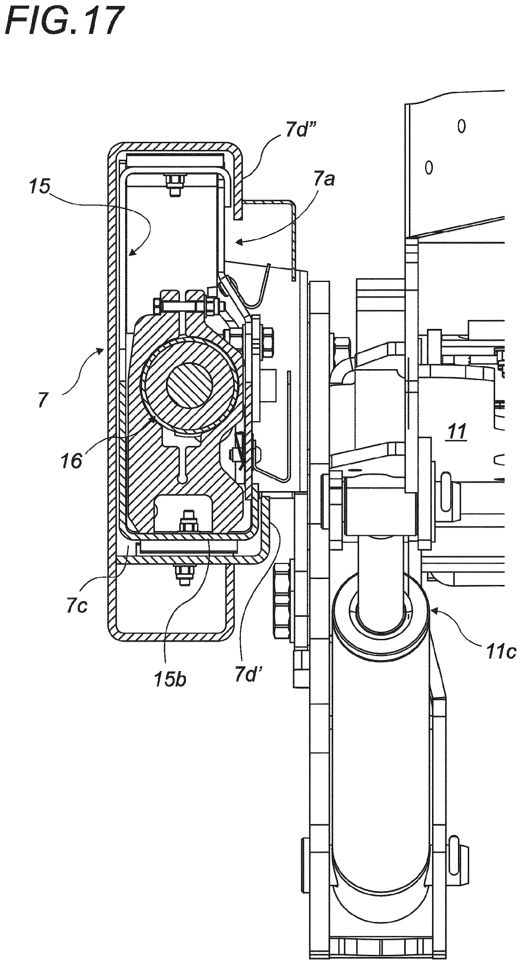

La figure 17 est vue en coupe selon le plan XVII-XVII de la figure 16d.

Le tiroir coulissant latéral arrière 15 présentent avantageusement une forme creuse ou tubulaire 15b dans laquelle est logé au moins en partie l'actionneur arrière 16 qui lui est associé.

Avantageusement, le tiroir coulissant latéral arrière 15 et le longeron 7 comportent des organes de retenu pour empêcher lesdits tiroirs 15 de s'extraire de la forme creuse 7c via la face ouverte 7a.

Selon le mode de réalisation, l'organe de retenu comprend un pli 7d', dirigé vers le haut, au niveau de l'extrémité intérieure et inférieure du longeron 7, le long de la face intérieure de la forme tubulaire 15b. Le longeron 7 présente un pli 7d", dirigé vers le bas, à son extrémité supérieure et intérieure. Le longeron 7 présente alors une sensiblement forme en C, selon une section transversale.

La présente invention est avantageuse dans la mesure où le déplacement vers l'arrière du gerbeur arrière 11, permet un chargement à plat, de gerber la voiture 6 puis de coulisser la voiture 6 pour ajuster sa position sur le plateau de chargement supérieur 4. Un tel chargement à plat est par exemple illustré aux figures 9 et 10 où le gerbeur arrière 11 est aligné avec le plateau de chargement supérieur 4. Une telle configuration est très intéressante dans le cas d'un gerbage positif, illustré par exemple aux figures 13 et 14. Avec les systèmes de chargement connus, le dernier gerbeur est déjà incliné lorsqu'on y charge la voiture 6. Comme le plateau de chargement supérieur 4 est lui-même déjà incliné, illustré par exemple à la figure 9, il faudrait gravir des rampes présentant une inclinaison de plus de 25%. Une telle inclinaison est trop importante pour assurer une sécurisation raisonnable des opérations de chargement.

En outre, la transition entre des rails de chargement 4a et le dernier gerbeur 11 est brutale favorisant le risque d'accrochage des béquets des voitures 6.

L'unité routière 1 porte-voitures se démarque donc de manière très avantageuse et contre toute attente de l'art antérieur connu.

L'unité routière 1 porte-voitures conforme à l'invention est avantageusement une remorque ou une semi-remorque.

De manière évidente, l'invention ne se limite pas au mode de réalisation préférentiel décrit précédemment et représenté sur les différentes figures, l'homme du métier pouvant y apporter de nombreuses modifications et imaginer d'autres variantes, dans les limites de l'invention définie par les revendications.

Ainsi, une caractéristique technique décrite peut être remplacée par une caractéristique technique équivalente sans sortir ni de la portée, ni du cadre de l'invention définis par les revendications.

## Revendications

1. Unité routière (1) porte-voitures comportant un châssis (17) équipé d'au moins un essieu, un niveau de chargement inférieur (3) localisé au niveau du châssis (17), un plateau de chargement supérieur (4) lié au châssis (17) par l'intermédiaire des systèmes de levage (6) avant et arrière pour déplacer en hauteur et incliner ledit plateau de chargement supérieur (4), lequel comporte un gerbeur avant (9), un gerbeur central (10) et un gerbeur arrière (11) de préférence inclinables, pouvant porter chacun une voiture (5), **caractérisé en ce que** le gerbeur avant (9) est monté sur le plateau de chargement supérieur (4) par l'intermédiaire de tiroirs latéraux coulissants avant (13) et d'actionneurs avant (14) de manière à pouvoir ajuster l'écartement entre le gerbeur avant (9) et le gerbeur central (10), le gerbeur arrière (11) étant monté sur le plateau de chargement supérieur (4) par l'intermédiaire de tiroirs latéraux coulissants arrière (15) et d'actionneurs arrière (16) latéraux de manière à pouvoir ajuster l'écartement entre le gerbeur arrière (11) et le gerbeur central (10), le plateau de chargement supérieur (4) comportant deux longerons (7) reliés grâce à des traverses transversales (8), chacun des longerons (7) présentant une forme creuse avec une face ouverte (7a) en regard de l'autre longeron (7), les tiroirs latéraux coulissants arrières (15) étant logés dans les formes creuses (7c),les tiroirs coulissants arrière (15) latéraux présentant une forme tubulaire dans laquelle sont logés au moins en partie l'actionneur arrière (16) qui lui est associé ainsi qu'au moins une partie de circuits électriques et/ou hydrauliques correspondants, les tiroirs coulissants arrières (15) latéraux et les longerons (7) comportant des organes de retenu pour empêcher lesdits tiroirs latéraux coulissants arrière (15) de s'extraire latéralement de la forme creuse (7c) via la face ouverte (7a).

2. Unité routière (1) porte-voitures selon la revendication 1, **caractérisé en ce que** le gerbeur central (10) est monté sur le plateau de chargement supérieur (4) par l'intermédiaire de tiroirs latéraux coulissants centraux et d'actionneurs centraux de manière à pouvoir ajuster son écartement par rapport au gerbeur arrière (11) et par rapport au gerbeur avant (9).

3. Unité routière (1) porte-voitures selon la revendication 1 ou 2, **caractérisé en ce que** le plateau de chargement supérieur (4) est monté coulissant sur les systèmes de levage (6) de manière à pouvoir se déplacer par rapport aux systèmes de levage (6) d'avant en arrière et inversement, grâce à des actionneurs additionnels (18), pour ajuster la position du plateau de chargement supérieur (4) par rapport au châssis (17) et par rapport à un véhicule tracteur (2).

4. Unité routière (1) porte-voitures selon l'une quelconque des revendications 1 à 3, **caractérisé en ce que** le système de levage (6) comprend de chaque côté latéral du châssis (17), un bras de levage articulé avant (20) et un bras de levage articulé arrière (19) et des actionneurs de levage correspondants.

5. Unité routière (1) porte-voitures selon la revendication 4, **caractérisé en ce que** les bras articulés arrière (19) du système de levage (6) comportent à leur extrémité supérieure, un palier de coulissement (21) dans lequel est engagé et guidé le longeron (7) correspondant, ledit palier de coulissement (21) et ledit longeron (7) comportant des organes de retenu pour empêcher ledit longeron (7) de s'extraire latéralement dudit palier de coulissement (21).

6. Unité routière (1) porte-voitures selon l'une quelconque des revendications 1 à 5, **caractérisé en ce qu'**au moins le gerbeur arrière (11) comporte une partie télescopique avant et ou arrière, associée(s) à un actionneur d'allongement pour ajuster la longueur dudit gerbeur (11).

7. Unité routière (1) porte-voitures selon l'une quelconque des revendications 1 à 5, **caractérisé en ce qu'**au moins un des gerbeurs avant (9), central (10) et arrière (11) comporte une partie télescopique avant associée(s) à un actionneur d'allongement pour ajuster la longueur dudit gerbeur (9, 10, 11).

8. Unité routière (1) porte-voitures selon l'une quelconque des revendications 1 à 5, **caractérisé en ce qu'**au moins un des gerbeurs avant (9), central (10) et arrière (11) comporte une partie télescopique arrière associée(s) à un actionneur d'allongement pour ajuster la longueur dudit gerbeur (9, 10, 11).

9. Unité routière (1) porte-voitures selon l'une quelconque des revendications 1 à 8, **caractérisé en ce que** chacun des gerbeurs avant (9), central (10) et arrière (11) est associé à un système d'inclinaison individuel (12, 11c) pour ajuster son inclinaison par rapport au plateau de chargement supérieur (4).

10. Unité routière (1) porte-voitures selon l'une quelconque des revendications 1 à 9, **caractérisé en ce qu'**elle constitue une remorque ou une semi-remorque.

## Patentansprüche

1. Fahrzeug- Transporteinheit (1) mit einem Fahrgestell (17), ausgerüstet mit mindestens einer Achse, einer unteren Ladeebene (3), die sich in Höhe des Fahrgestells (17) befindet, einer oberen Ladeplattform (4), über Hebesysteme (6) vorne und hinten mit dem Fahrgestell (17) verbunden, um diese obere Ladeplattform (4) in der Höhe zu verstellen und zu neigen, diese enthält einen vorderen Stapler (9), einen zentralen Stapler (10) und einen hinteren Stapler (11), möglichst verstellbar, die jeder ein Fahrzeug (5) tragen können, **dadurch gekennzeichnet, dass** der vordere Stapler (9) auf der oberen Ladeplattform (4) über seitliche Schubfächer vorne (13) und Stellglieder vorne (14) montiert ist, so dass der Abstand zwischen dem vorderen Stapler (9) und dem zentralen Stapler (10) eingestellt werden kann, der hintere Stapler (11) ist dabei über seitliche Schubfächer hinten (15) und seitliche Stellglieder hinten (16) auf der oberen Ladeplattform (4) montiert, so dass der Abstand zwischen dem hinteren Stapler (11) und dem zentralen Stapler (10) eingestellt werden kann, die obere Ladeplattform (4) enthält dabei zwei Längsträger (7), verbunden über Querträger (8), jeder der Längsträger (7) weist eine hohle Form auf, mit einer offenen Seite (7a) zum anderen Längsträger (7) hin, die seitlichen Schubfächer hinten (15) sind dabei in den hohlen Formen (7c) untergebracht, die seitlichen Schubfächer hinten (15) haben die Form einer Röhre, in der zumindest teilweise das hintere Stellglied (16) untergebracht ist, das mit ihm verbunden ist, sowie mindestens ein Teil der entsprechenden elektrischen und/ oder hydraulischen Kreise, die seitlichen Schubfächer hinten (15) und die Längsträger (7) enthalten dabei Rückhaltevorrichtungen, um zu verhindern dass die erwähnten seitlichen Schubfächer hinten (15) seitlich aus der Hohlform (7c) über die offene Seite (7a) rutschen.

2. Fahrzeug- Transporteinheit (1) nach Anspruch 1, **dadurch gekennzeichnet, dass** der zentrale Stapler (10) an der oberen Ladeplattform (4) über zentrale seitliche Schubfächer und zentrale Stellglieder montiert ist, so dass sein Abstand zum hinteren Stapler (11) und zum vorderen Stapler (9) eingestellt werden kann.

3. Fahrzeug- Transporteinheit (1) nach Anspruch 1 oder 2, **dadurch gekennzeichnet, dass** die obere Ladeplattform (4) verschiebbar auf den Hebesystemen (6) montiert ist, so dass sie bezogen auf die Hebesysteme (6) vorne und hinter hin und her verschoben werden kann, dank zusätzlicher Stellglieder (18), um die Position der oberen Ladeplattform (4) in Bezug auf das Fahrgestell (17) und in Bezug zu einer Zugmaschine (2) zu verstellen.

4. Fahrzeug- Transporteinheit (1) nach irgendeinem der vorstehenden Ansprüche 1 bis 3, **dadurch gekennzeichnet, dass** das Hebesystem (6) auf jeder der Seitenflächen des Fahrgestells (17), einen abgewinkelten Hebearm vorne (20) und einen abgewinkelten Hebearm hinten (19) enthält, sowie die entsprechenden Hebe-Stellglieder.

5. Fahrzeug- Transporteinheit (1) nach Anspruch 4, **dadurch gekennzeichnet, dass** die hinteren Hebearme (19) des Hebesystems (6) an ihren oberen Enden ein Gleitlager (21) enthalten, zur Aufnahme und Führung des entsprechenden Längsträgers (7), dieses Gleitlager (21) und dieser Längsträger (7) enthalten Rückhaltevorrichtungen, um zu verhindern, dass dieser Längsträger (7) seitlich aus dem Gleitlager (21) rutscht.

6. Fahrzeug- Transporteinheit (1) nach irgendeinem der vorstehenden Ansprüche 1 bis 5, **dadurch gekennzeichnet, dass** mindestens der hintere Stapler (11) einen ausziehbaren Teil vorne oder hinten enthält, verbunden mit einem Verlängerungsstellglied, um die Länge dieses Staplers (11) anzupassen.

7. Fahrzeug- Transporteinheit (1) nach irgendeinem der vorstehenden Ansprüche 1 bis 5, **dadurch gekennzeichnet, dass** mindestens einer der vorderen (9), zentralen (10) und hinteren (11) Stapler einen ausziehbaren Teil vorne enthält, verbunden mit einem Verlängerungsstellglied, um die Länge dieses Staplers (9, 10, 11) anzupassen.

8. Fahrzeug- Transporteinheit (1) nach irgendeinem der vorstehenden Ansprüche 1 bis 5, **dadurch gekennzeichnet, dass** mindestens einer der vorderen (9), zentralen (10) und hinteren (11) Stapler einen ausziehbaren Teil hinten enthält, verbunden mit einem Verlängerungsstellglied, um die Länge dieses Staplers (9, 10, 11) anzupassen.

9. Fahrzeug- Transporteinheit (1) nach irgendeinem der vorstehenden Ansprüche 1 bis 8, **dadurch gekennzeichnet, dass** jeder der vorderen (9), zentralen (10) und hinteren (11) Stapler mit einem individuellen (12, 11c) Kippsystem verbunden ist, um seine Neigung gegenüber der oberen Ladeplattform (4) zu verändern.

10. Fahrzeug- Transporteinheit (1) nach irgendeinem der vorstehenden Ansprüche 1 bis 8, **dadurch gekennzeichnet, dass** sie einen Anhänger oder Auflieger bildet.

## Claims

1. A car-carrying road unit (1) comprising a chassis (17) equipped with at least one axle, a lower loading level (3) located at the chassis (17), an upper loading plate (4) connected to the chassis (17) by means of the front and rear lifting systems (6) in order to move in height and tilt said upper loading plate (4), which comprises a front stacker (9), a central stacker (10) and a rear stacker (11), preferably tiltable, each capable of carrying a car (5), **characterised in that** the front stacker (9) is mounted on the upper loading plate (4) via front sliding side drawers (13) and front actuators (14) so as to be able to adjust the spacing between the front stacker (9) and the central stacker (10), the rear stacker (11) being mounted on the upper loading plate (4) via rear sliding side drawers (15) and rear side actuators (16) so as to be able to adjust the spacing between the rear stacker (11) and the central stacker (10), the upper loading plate (4) comprising two outriggers (7) connected by means of transverse cross-members (8), each of the outriggers (7) having a hollow shape with an open face (7a) facing the other outrigger (7), the rear sliding side drawers (15) being housed in the hollow shapes (7c), the rear sliding side drawers (15) having a tubular shape in which are housed at least in part the rear actuator (16) associated therewith and at least part of the corresponding electrical and/or hydraulic circuits, the rear sliding side drawers (15) and the outriggers (7) comprising retaining members for preventing said rear sliding side drawers (15) from being extracted laterally from the hollow shape (7c) via the open face (7a).

2. The car-carrying road unit (1) according to claim 1, **characterised in that** the central stacker (10) is mounted on the upper loading plate (4) via central sliding side drawers and central actuators so as to be able to adjust its spacing relative to the rear stacker (11) and relative to the front stacker (9).

3. The car-carrying road unit (1) according to claim 1 or 2, **characterised in that** the upper loading plate (4) is slidably mounted on the lifting systems (6) so as to be able to move relative to the lifting systems (6) from front to rear and vice versa, by means of additional actuators (18), in order to adjust the position of the upper loading plate (4) relative to the chassis (17) and relative to a towing vehicle (2).

4. The car-carrying road unit (1) according to anyone of claims 1 to 3, **characterised in that** the lifting system (6) comprises, on each lateral side of the chassis (17), a front articulated lifting arm (20) and a rear articulated lifting arm (19) and corresponding lifting actuators.

5. The car-carrying road unit (1) according to claim 4, **characterised in that** the rear articulated arms (19) of the lifting system (6) comprise, at their upper end, a sliding bearing (21) in which the corresponding outrigger (7) is engaged and guided, said sliding bearing (21) and said outrigger (7) comprising retaining members to prevent said outrigger (7) from being extracted laterally from said sliding bearing (21).

6. The car-carrying road unit (1) according to anyone of claims 1 to 5, **characterised in that** at least the rear stacker (11) has a front and/or rear telescopic part, associated with an elongation actuator for adjusting the length of said stacker (11).

7. The car-carrying road unit (1) according to anyone of claims 1 to 5, **characterised in that** at least one of the front (9), central (10) and rear (11) stackers comprises a front telescopic part associated with an extension actuator to adjust the length of said stacker (9, 10, 11).

8. The car-carrying road unit (1) according to anyone of claims 1 to 5, **characterised in that** at least one of the front (9), central (10) and rear (11) stackers comprises a rear telescopic part associated with an extension actuator to adjust the length of said stacker (9, 10, 11).

9. The car-carrying road unit (1) according to anyone of claims 1 to 8, **characterised in that** each of the front (9), central (10) and rear (11) stackers is associated with an individual tilting system (12, 11c) to adjust its inclination with respect to the upper loading plate (4).

10. The car-carrying road unit (1) according to anyone of claims 1 to 9, **characterised in that** it constitutes a trailer or a semi-trailer.
